# FASCICULE DE BREVET EUROPEEN

(11) **EP 2 451 657 B1**
(45) Date de publication et mention de la délivrance du brevet: **01.01.2014**
(21) Numéro de dépôt: 10734085.3
(22) Date de dépôt: 08.07.2010
(51) Int. Cl.: B60C 1/00, C08L 7/00, C08K 5/18, C08K 5/17, C08L 21/00

(54) **COMPOSITION A BASE DE CAOUTCHOUC NATUREL ET D'UN COMPOSE POLY-AMINE**
ZUSAMMENSETZUNG AUF BASIS VON NATURKAUTSCHUK UND EINER POLYAMINE VERBINDUNG
COMPOSITION BASED ON NATURAL RUBBER AND POLYAMINE COMPOUND

(30) Priorité: 10.07.2009 FR 0903438
(43) Date de publication de la demande: 16.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ARAUJO DA SILVA, José Carlos, F-63430 Pont du Château (FR); BELZ, Justin, F-63200 Riom (FR); DE LANDTSHEER, Stéphanie, 115184 Moscou (RU); SIMON, Nathalie, F-63350 Maringues (FR)
(74) Mandataire: Le Cam, Véronique Marie Christine
(86) Numéro de dépôt international: PCT/EP2010/059829
(87) Numéro de publication internationale: WO 2011/003983

(56) Documents cités:
- EP-A2- 1 918 307
- DE-A1-102007 019 742
- US-A- 3 038 868
- US-A- 3 821 133
- US-A1- 2005 085 583
- DATABASE WPI Week 198938 Thomson Scientific, London, GB; AN 1989-273428 XP002599546 & JP 1 197542 A (BRIDGESTONE TIRE KK) 9 août 1989 (1989-08-09)

## Description

La présente invention se rapporte à des compositions de caoutchouc renforcées à base de caoutchouc naturel comportant au moins un composé poly-amine possédant des propriétés hystérétiques améliorées à l'état vulcanisé. Ces compositions de caoutchouc sont destinées par exemple à la fabrication d'un produit semi-fini en caoutchouc destiné aux pneumatiques des véhicules terrestres et aériens.

Depuis que les économies de carburant et la nécessité de protéger l'environnement sont devenues une priorité, il s'est avéré nécessaire de produire des pneumatiques ayant une résistance au roulement aussi faible que possible, sans pénalisation de leur résistance à l'usure. Ceci a été rendu possible notamment grâce à l'utilisation, dans les compositions de caoutchouc, de charges inorganiques spécifiques, capables de rivaliser du point de vue renforçant avec une charge organique telle que le noir de carbone conventionnel de grade pneumatique, tout en offrant à ces compositions une hystérèse plus faible, synonyme d'une plus basse résistance au roulement pour les pneumatiques les comportant.

Diminuer davantage la résistance au roulement demeure dans le contexte économique et écologique actuel un souci permanent malgré les bas niveaux atteints respectivement tant avec les charges inorganiques spécifiques qualifiées de "renforçantes" qu'avec un noir de carbone. De nombreuses pistes ont déjà été explorées pour abaisser encore l'hystérése des compositions de caoutchouc renforcées avec de telles charges renforçantes. On peut citer, à titre d'exemple, la modification de la structure des polymères diéniques en fin de polymérisation au moyen d'agents de fonctionnalisation, de couplage ou d'étoilage dans le but d'obtenir une bonne interaction entre le polymère ainsi modifié et la charge renforçante. On peut également citer la demande de brevet WO 96/37547A1 décrivant une composition de caoutchouc utilisant à titre de charge renforçante du noir de carbone avec de la silice fixée sur sa surface, à base d'un polymère diénique fonctionnalisé ou non et d'un agent de recouvrement et de couplage silane en quantité relativement élevée.

US 2005/0085583 concerne une composition de caoutchouc pour réduire l'hystérèse. Cette composition comprend du caoutchouc naturel, une charge renforçage et un composé à base d'azote choisi dans le groupe constitué par une multitude de composés. Parmi ce types de composés, US 2005/0085583 inclut de manière générique les polyamines hydrocarbonées. Ces polyamines comportent une terminaison hydrocarbonée de masse molaire allant de 400 à 300, préférentiellement une terminaison de propylène ou d'isobulylène.

La demande de brevet JP2006063206A1 divulgue l'utilisation de poly-imines, obtenues par réaction de poly-amines avec un composé ayant une fonction carbonyle, pour améliorer la résistance à l'abrasion de compositions à base de caoutchoucs naturels ou synthétiques contenant une charge inorganique en tant que charge renforçante unique ou majoritaire ou en coupage avec du noir de carbone présent en quantité minoritaire et un agent de couplage silane sans significativement détériorer les propriétés d'allongement et viscoélastiques de la composition et des pneumatiques les comportant. Dans ce document, il n'a pas été fait mention d'un intérêt quelconque d'une utilisation des poly-amines dans le domaine des pneumatiques.

Les hydrazides, appartenant à une famille proche de celle des amines, sont de manière générale connue pour baisser l'hystérèse de mélanges à base de caoutchouc naturel et de noir de carbone comme charge renforçante unique ou majoritaire. Dans des mélanges hybrides de l'art antérieur, notamment EP0738754A1, la diminution des pertes hystérétiques est de l'ordre de 13% après adjonction de composés dihydrazides. La demande de brevet FR08/58989 A1 des inventeurs revendique également l'utilisation de dihydrazides particuliers pour diminuer significativement l'hystérèse de mélanges de caoutchouterie.

Les inventeurs ont découvert de manière surprenante lors de leurs recherches que dans une composition de caoutchouc à base de caoutchouc naturel non halogéné comme élastomère principal et renforcée soit avec une charge organique telle que du noir de carbone, soit avec une charge inorganique renforçante telle que la silice ou encore un coupage de charges organique et inorganique, l'adjonction à un faible taux de certains composés polyamines primaires confère à ces compositions vulcanisées des propriétés de caoutchouterie, en particulier des propriétés hystérétiques, améliorées, notamment permet de diminuer de manière significative l'hystérèse initiale de la composition. Cette diminution significative de l'hystérèse dans les proportions observées dans le cadre des compositions comportant un composé poly-amine est pour le moins inattendue.

Les propriétés hystérétiques significativement améliorées de telles compositions conformes à l'invention à base de caoutchouc naturel non halogéné et d'un composé polyamine primaire, rendent ces dernières particulièrement adaptées à la fabrication de produits semi-finis en caoutchouc destinés aux pneumatiques, notamment de véhicules terrestres à moteur, tels que des sous-couches, des gommes d'enrobage de renforts métalliques ou textiles, des gommes de flancs ou des bandes de roulement.

Ainsi, un objet de la présente invention est une composition de caoutchouc renforcée à base au moins d'une matrice élastomérique comprenant du caoutchouc naturel non halogéné, d'une charge renforçante organique ou inorganique ou d'un coupage des deux, d'un agent de couplage en cas d'utilisation d'une charge inorganique et d'un composé polyamine primaire répondant aux formules 1 ou 2 suivantes: 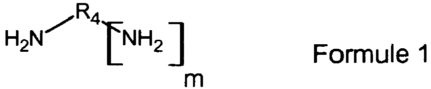 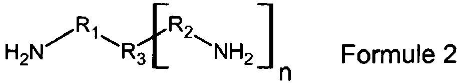 dans lesquelles :
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₄, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s), identiques ou différents, choisi(s) parmi O, N, S et Si.
- m est égal à 1, 2 ou 3.
- n est égal à 1, 2 ou 3.
dans une quantité comprise entre 0 et 7 mmol pour 100g d'élastomère.

Un autre objet de l'invention est un procédé de préparation d'une telle composition de caoutchouc renforcée définie plus haut.

L'invention a également pour objet un produit semi-fini en caoutchouc pour pneumatique constitué en tout ou partie de la composition de caoutchouc renforcée définie plus haut.

Un autre objet de l'invention est un pneumatique comprenant au moins un produit semi-fini en caoutchouc constitué en tout ou partie de la composition de caoutchouc renforcée telle que définie plus haut.

Pour plus de clarté à la lecture de ce qui va suivre, on entend par l'expression composition "à base de", une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par ailleurs, les quantités des composants de l'invention peuvent être exprimées en pce, c'est-à-dire en partie (en poids) pour cent parties en poids d'élastomère.

Ainsi un premier objet de l'invention est une composition de caoutchouc renforcée à base au moins (a) d'une matrice élastomérique comprenant au moins du caoutchouc naturel non halogéné à titre majoritaire, (b) d'une charge renforçante et (c) d'un composé poly-amine primaire répondant aux formules 1 ou 2 suivantes: 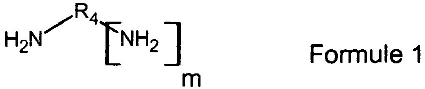 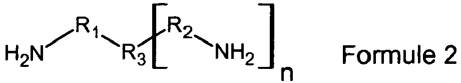 dans lesquelles :
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₄, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s), identiques ou différents, choisi(s) parmi O, N, S et Si.
- m est égal à 1, 2 ou 3.
- n est égal à 1, 2 ou 3.
- dans une quantité comprise entre 0 et 7 mmol pour 100g d'élastomère.

A titre de composés poly-amines primaires, sont utilisés préférentiellement les composés possédant deux, trois ou quatre fonctions amines primaires.

Les poly-amines répondant à la formule 1 peuvent être par exemple : 1,2-propylènediamine, 3,3'-diméthyl-4,4'-diamino-dicyclohexylméthane, 4,4'-diaminodicyclohexylmethane, isophore diamine, néopentanediamine (2,2-diméthyl-propane-1,3-diamine), 1,8-octaméthylènediamine, 4,4'-méthylènedianiline molten, ethylènediamine, 1,3-diaminopropane, 1,6-hexaméthylènediamine, 1,4-phénylènediamine, 1,3-phénylènediamine, 1,2-phénylènediamine, 1,2-diaminocyclohexane, 1,3-diaminocyclohexane, 1,4-diaminocyclohexane, 1,3-diamino-4-méthylbenzène et préférentiellement 1,8-octaméthylènediamine, 1,6-hexaméthylènediamine, 1,2-diaminocyclohexane et 1,4-diaminocyclohexane .

Les poly-amines répondant à la formule 2 peuvent être par exemple : 4,7,10-trioxatridécane-1,13-diamine, 4,9-dioxadodécane-1,12-diamine, diéthylènetriamine, N-3-amine-(3-(2-aminoéthylamino)propylamine), dipropylène triamine, N,N-Bis-(3-aminopropyl)méthylamine, N-4-amine-(N,N'-Bis-(3-aminopropyl)-ethylènediamine), 2,4-diamino-6-méthyl-1,3,5-triazine, 2,4-diamino-6-phényl-s-triazine, mélamine, triéthylènetetramine, tetraéthylènepentamine, 2,2',2"-nitrilotriéthylamine 3,6-dioxaoctane-1,8-diamine, N,N,N-tris(2-aminoéthyl)amine, bis (3-aminopropyl)tetramethyldisiloxane, 2-(2-aminoéthoxy)ethanamine, 3- {2-[2-(3-aminopropoxy)éthoxy]éthoxy}propan-1-amine, 3-[4-(3-aminopropoxy)phénoxy]propan-1-amine, 3- {2-(3-aminopropoxy)-I-[(3-aminopropoxy) méthyl]éthoxy}propan-1-amine, 2-({2-[(2-aminophenyl)thio]éthyl}thio)aniline, 2-[(3-{[(2-aminophényl)thio]méthyl}-2,4,6-triméthylbenzyl)thio]aniline, 2-({4-[(2-aminophényl)thio] but-2-enyl}thio)aniline et préférentiellement N,N-bis(2-aminoethyl)ethane-1,2-diamine .

Selon la présente invention, les composés poly-amines répondant aux formules 1 ou 2 sont de préférence choisis parmi ceux pour lesquels R₁, R₂ et R₄ sont chacun un radical hydrocarboné choisi parmi les radicaux alkylidènes linéaires ou ramifiés, non substitués, ayant 2 à 8 atomes de carbone et les radicaux cycloalkylidènes ayant 6 atomes de carbone et R₃ est un radical alkylidène non substitué ayant de 2 à 8 atomes de carbone ou un radical alkylidène ayant de 2 à 6 atomes de carbone comportant N à titre d'hétéroatome.

Plus préférentiellement, les composés poly-amines sont choisis parmi les amines primaires suivantes: 1,4-diaminocyclohexane, 1,2-diaminocyclohexane, N,N-bis(2-aminoethyl)ethane-1,2-diamine , 1,8-octaméthylènediamine, 1,6-hexaméthylènediamine.

La composition de caoutchouc du composant de pneumatique selon l'invention comprend le composé poly-amine dans une quantité comprise entre 0 et 7 mmol pour 100g d'élastomère, de préférence allant de 1 à 6 mmol, c'est-à-dire, comprend un faible taux de composé poly-amine. Dans le cas d'une diamine à chaîne alkylidène courte, c'est-à-dire possédant des chaînes C1 à C8, les quantités ci-dessus correspondent à une quantité comprise entre 0 et 1 pce, et préférentiellement allant de 0,2 à 0,9 pce. Par "composé polyamine" selon l'invention, il faut comprendre un composé ou un mélange de plusieurs composés de formules 1 ou 2.

Selon l'invention, la matrice élastomérique de la composition est à base de caoutchouc naturel. Dans certains cas, la matrice élastomérique peut avantageusement être entièrement constituée de caoutchouc naturel (100% de la matrice élastomérique est constituée de caoutchouc naturel). Cette variante est préférentiellement mise en oeuvre lorsqu'il s'agit d'utiliser la composition de caoutchouc pour fabriquer des flancs, des bandes de roulement pour pneumatiques de véhicules utilitaires tels que Poids Lourds ou encore certaines applications, telles que glace ou neige, de véhicules tourismes, ou encore pour fabriquer des composites renfort métallique/caoutchouc, tels que par exemple les nappes sommets ou carcasse.

Le caoutchouc naturel présent dans la matrice élastomérique est un caoutchouc naturel non halogéné.

La matrice élastomérique peut également, outre le caoutchouc naturel, comprendre au moins un autre élastomère diénique.

Dans ce cas, ce ou ces autres élastomères diéniques sont alors présents dans la matrice dans des proportions comprises entre 0 et 50 % en poids (les bornes de ce domaine étant exclues), préférentiellement de 5% à 40%, encore plus préférentiellement de 15% à 40%.

Dans le cas d'un coupage avec au moins un autre élastomère diénique, la fraction pondérale du caoutchouc naturel non halogéné dans la matrice élastomérique est majoritaire et de préférence supérieure ou égale à 50% en poids du poids total de la matrice, encore plus préférentiellement de 60% à 85% en poids du poids total de la matrice.

On appelle fraction pondérale majoritaire selon l'invention la fraction pondérale la plus élevée du coupage. Ainsi, dans un coupage ternaire NR/élastomère A/élastomère B, les fractions pondérales peuvent être réparties selon les proportions 45/30/25 ou 40/40/20 ou 40/30/30, les fractions pondérales majoritaires étant respectivement 45 ou 40 et dans un coupage binaire NR/élastomère, les fractions pondérales peuvent être réparties selon les proportions 50/50 ou 70/30, les fractions pondérales majoritaires étant 50 ou 70.

Par élastomère diénique, doit être compris selon l'invention tout caoutchouc naturel, éventuellement fonctionnalisé, ou tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques. Le caoutchouc naturel éventuellement fonctionnalisé est préférentiellement un caoutchouc époxydé.

L'élastomère diénique constituant une partie de la matrice élastomérique selon l'invention est choisi préférentiellement dans le groupe des élastomères diéniques fortement insaturés constitué par les polybutadiènes (BR), les copolymères de butadiène, les polyisoprènes (PI), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

L'élastomère diénique constituant une partie de la matrice élastomérique selon l'invention peut être étoilé, couplé, fonctionnalisé ou non, de manière connue en soi, au moyen d'agents de fonctionnalisation, de couplage ou d'étoilage connus de l'homme de l'art. On peut par exemple citer parmi d'autres plus classiques, les élastomères couplés selon les procédés décrits dans les demandes au nom des Demanderesses WO 08/141702, FR 2 2910 64, FR 2 291 065 et FR 07/60442.

La composition de caoutchouc selon l'invention comprend au moins trois composés, dont une charge renforçante dans des proportions allant de 35 à 200 pce. De manière préférentielle, le taux de charge renforçante totale est compris entre 40 et 140 pce, plus préférentiellement entre 50 et 130 pce, l'optimum étant de manière connue différent selon les applications particulières du pneumatique visées; le niveau de renforcement attendu sur un pneumatique vélo, par exemple, est bien sûr inférieur à celui exigé sur un pneumatique apte à rouler à grande vitesse de manière soutenue, par exemple un pneumatique moto, un pneumatique pour véhicule de tourisme ou pour véhicule utilitaire tel que Poids lourd.

La charge renforçante est constituée d'une charge organique renforçante telle que du noir de carbone ou d'une charge inorganique renforçante, telle que de la silice renforçante, dans des proportions allant de 0 à 100% en poids du poids total de la composition, ou d'un coupage charge organique(s)/charge inorganique(s) selon l'application visée. La proportion de charge organique ou inorganique est respectivement préférentiellement supérieure ou égale à 50% en poids du poids total de la composition, plus particulièrement supérieure à 55% selon l'application visée. La seconde charge renforçante contenue en coupage (mélange) de la charge renforçante majoritaire est alors préférentiellement présente selon une fraction pondérale inférieure à 50 % par rapport au poids total de la composition.

Par "charge inorganique renforçante", doit être entendu dans la présente demande, par définition, toute charge inorganique ou minérale quelles que soient sa couleur et son origine (naturelle ou de synthèse), encore appelée charge "blanche", charge "claire" voire "charge non noire" ("non-black filler") par opposition à une charge organique conventionnelle telle que du noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, même si les silices précipitées hautement dispersibles sont préférées. A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Comme charge organique renforçante conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, mais aussi des noirs plus grossiers comme par exemple les noirs N550 ou N683. Les noirs de carbone pourraient être par exemple déjà incorporés au caoutchouc naturel sous la forme d'un masterbatch.

Les coupages noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Comme exemples de charges organiques renforçantes autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

Dans le cas où la charge renforçante ne contient qu'une charge inorganique renforçante majoritaire et du noir de carbone, la fraction pondérale de ce noir de carbone dans ladite charge renforçante est plus préférentiellement choisie inférieure ou égale à 30 % par rapport au poids total de la charge renforçante.

Dans le cas où la charge renforçante contient une charge inorganique renforçante, la composition de caoutchouc selon l'invention comprend au moins quatre composés, dont un agent de couplage pour coupler la charge inorganique renforçante au caoutchouc naturel et aux éventuels élastomères diéniques qui composent la matrice élastomérique.

Par agent de couplage, on entend plus précisément un agent apte à établir une liaison suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée "Y-T-X'", dans laquelle :
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);
- X' représente un groupe fonctionnel (fonction "X'") capable de se lier physiquement et/ou chimiquement à l'élastomère, par exemple par l'intermédiaire d'un atome de soufre;
- T représente un groupe divalent permettant de relier Y et X'.

Des agents dits de recouvrement des particules de charge inorganique peuvent également être utilisés, qui sont susceptibles d'améliorer encore, en se liant aux sites fonctionnels de surface de la charge inorganique et en la recouvrant ainsi au moins partiellement, la dispersion de cette dernière dans la matrice élastomérique, abaisser ainsi sa viscosité à cru et améliorer globalement sa mise en oeuvre à l'état cru.

De tels agents de recouvrement appartiennent essentiellement à la famille des polyols (par exemple des diols, des triols tels que glycérol ou ses dérivés), des polyéthers (par exemple des polyethylène-glycols), des amines primaires, secondaires ou tertiaires (par exemple des trialcanol-amines), des polyorganosiloxanes hydroxylés ou hydrolysables, par exemple des α,ω-dihydroxy-polyorganosilanes (notamment des α,ω-dihydroxy-polydiméthylsiloxanes), des hydroxysilanes, des alkylalkoxysilanes, notamment des alkyltriéthoxysilanes comme par exemple le 1-octyl-triéthoxysilane commercialisé par la société Degussa-Evonik sous la dénomination « Dynasylan Octeo ». Ces agents de recouvrement sont bien connus en compositions de caoutchouc pour pneumatique renforcées d'une charge inorganique ; ils ont été décrits, par exemples, dans les demandes de brevet WO 00/05300, WO 01/55252, WO 01/96442, WO 02/031041, WO 02/053634, WO 02/083782, WO 03/002648, WO 03/002653, WO 03/016387, WO 2006/002993, WO 2006/125533, WO 2007/017060 et WO 2007/003408.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X' active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X' et Y précitées. Des agents de liaison silice/élastomère, notamment, ont été décrits dans un grand nombre de documents, les plus connus étant des alkoxysilanes bifonctionnels tels que des alkoxysilanes polysulfurés. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple d'autres silanes porteurs au moins d'une fonction thiol (SH) (dits mercaptosilanes) et/ou d'au moins une fonction thiol bloquée, tels que décrits par exemple dans les brevets ou demandes de brevet US 6849754, WO 99/09036, WO 2006/023815, WO 2007/098080.

Bien entendu pourraient être également utilisés des mélanges des agents de couplage précédemment décrits, comme décrit notamment dans la demande WO 2006/125534.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce, en particulier de 4 à 7 pce. Ce taux est aisément ajusté par l'homme du métier selon le taux de charge inorganique utilisé dans la composition.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, comme par exemple à titre non limitatif, les charges qui sont commercialisées par la société CABOT sous la dénomination « CRX 2000 », et qui sont décrites dans le document de brevet international WO-A-96/37547, ou bien comporterait à sa surface des sites fonctionnels, notamment hydroxyles, nécessitant l'utilisation d'un agent de couplage pour établir la liaison entre la charge et l'élastomère.

Les compositions de caoutchouc conformes à l'invention peuvent également contenir, en complément des agents de couplage, des activateurs de couplage, des agents de recouvrement des charges inorganiques comme décrits ci-dessus, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, antioxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention concerne également un procédé de préparation d'une composition de caoutchouc telle que décrite précédemment.

Il convient de noter que, selon l'invention, le composé poly-amine peut être incorporé, sur outil ouvert de type outil à cylindres (mélangeur externe) ou sur outil fermé de type mélangeur interne, à tout moment dans le procédé de préparation de la composition de caoutchouc décrite plus haut, y compris lors de la fabrication du caoutchouc naturel sur son site de production.

La composition est fabriquée dans des mélangeurs appropriés, en utilisant deux phases de préparation successives bien connues de l'homme du métier : (i) une première phase de travail ou malaxage thermomécanique (phase dite "non-productive") à haute température, jusqu'à une température maximale comprise entre 130°C et 200°C, de préférence entre 145°C et 185°C, suivie (ii) d'une seconde phase de travail mécanique (phase dite "productive") jusqu'à une plus basse température, typiquement inférieure à 110°C, par exemple entre 40°C et 100°C, encore dite phase de finition, au cours de laquelle est incorporé le système de réticulation. Par système de réticulation, on entend indifféremment les agents de réticulation utilisés conventionnellement avec les charges inorganiques et les agents de vulcanisation conventionnellement utilisés tels que le soufre et les accélérateurs de vulcanisation.

A titre d'exemple, la première phase (non-productive) est conduite en une seule étape thermomécanique au cours de laquelle on introduit dans un mélangeur approprié tel qu'un mélangeur interne, dans un premier temps à une température comprise entre 55°C et 80°C, par exemple de l'ordre de 70°C, le ou les élastomères diéniques, puis dans un second temps à une température comprise entre 80°C et 110°C, par exemple de l'ordre de 100°C, la charge renforçante, le composé poly-amine primaire au faible taux précité, les éventuels agents de mise en oeuvre complémentaires et les autres additifs, à l'exception du système de réticulation ou vulcanisation. La durée totale du malaxage, dans cette phase non-productive, est de préférence comprise entre 2 et 6 minutes avec une température de tombée maximale de 180°C.

Après refroidissement du mélange ainsi obtenu, on incorpore alors le système de vulcanisation à une température comprise entre 20°C et 50°C, par exemple de l'ordre de 30°C, généralement dans un mélangeur externe tel qu'un mélangeur à cylindre ; le tout est alors mélangé (phase productive) pendant quelques minutes, par exemple entre 2 et 6 minutes.

Le procédé conforme à l'invention pour préparer une composition de caoutchouc selon l'invention comporte au moins les étapes suivantes :
- la réalisation, à une température maximale comprise entre 130 °C et 200 °C, de préférence entre 145°C et 185°C, pendant une durée comprise de préférence entre 2 et 6 minutes, d'un premier temps de travail thermomécanique (parfois qualifié de phase " non productive") des constituants de base nécessaires de la composition de caoutchouc et du composé poly-amine primaire au faible taux précité, à l'exception du système de réticulation par incorporation de manière intime, par malaxage en une ou plusieurs étapes, à la matrice élastomère à base de caoutchouc naturel, de constituants de la composition, puis
- la réalisation, à une température inférieure à ladite température maximale dudit premier temps, de préférence inférieure à 110 °C (parfois qualifié de phase "productive"), pendant une durée comprise de préférence entre 2 et 6 minutes, d'un second temps de travail mécanique, avantageusement sur outil à cylindres, au cours duquel est incorporé ledit système de réticulation

Il convient de noter que, selon le procédé conforme à l'invention, le composé poly-amine primaire qui doit être incorporé dans la composition doit être incorporé à un faible taux, c'est-à-dire à un taux compris entre 0 et 7 mmol pour 100g d'élastomère et préférentiellement allant de 1 à 6 mmol pour 100g d'élastomère.

Le composé poly-amine répondant aux formules 1 ou 2 décrites ci-dessus peut donc être incorporé
- soit comme additif lors de la fabrication du caoutchouc naturel sur son site de production,.
- soit comme ingrédient de la composition de caoutchouc selon l'invention:
   - lors de la réalisation préalable d'un masterbatch caoutchouc naturel/ polyamine sur outil ouvert de type outil à cylindres (mélangeur externe) ou sur outil fermé de type mélangeur interne,
   - sans réalisation préalable d'un masterbatch, directement dans le mélangeur interne lors de la première phase non productive avec les autres composés de la composition de caoutchouc.

C'est pourquoi, selon une variante du procédé selon l'invention ladite variante comprend, préalablement à la réalisation de l'étape (i) précitée, les étapes de la fabrication classique du caoutchouc naturel qui comprend l'adjonction du composé poly-amine.

Une autre variante du procédé selon l'invention comprend, préalablement à la réalisation de l'étape (i) précitée, une étape de préparation d'un masterbatch à base de caoutchouc naturel non halogéné et du composé poly-amine répondant aux formules 1 ou 2.

Selon une autre variante du procédé de l'invention, tous les constituants de base de la composition de l'invention, y compris le composé poly-amine mais à l'exception du système de vulcanisation, sont incorporés au cours de la première étape (i), phase dite non-productive.

La composition finale ainsi obtenue peut ensuite être calandrée, par exemple sous la forme d'une feuille, d'une plaque ou encore extrudée, par exemple pour former un profilé de caoutchouc utilisable comme produit semi- fini en caoutchouc destiné au pneumatique.

L'invention a également pour objet un pneumatique qui incorpore dans au moins un de ses éléments constitutifs une composition de caoutchouc renforcée selon l'invention.

L'invention a tout particulièrement pour objet un produit semi-fini en caoutchouc comprenant une composition de caoutchouc renforcée selon l'invention, destiné à ces pneumatiques.

En raison de l'hystérèse réduite qui caractérise une composition de caoutchouc renforcée selon l'invention par rapport à l'hystérèse de la composition dépourvue de composé polyamine, on notera qu'un pneumatique dont la bande de roulement comprend la composition selon l'invention présente des propriétés hystérétiques améliorées, notamment permet de diminuer de manière significative l'hystérèse initiale de la composition synonyme d'une résistance au roulement avantageusement réduite.

En raison de l'hystérèse réduite qui caractérise une composition de caoutchouc renforcée selon l'invention par rapport à l'hystérèse d'une composition dépourvue de composé polyamine, on notera également qu'un pneumatique dont les flancs ou tout ou partie des compositions internes comprennent la composition de l'invention présente un autoéchauffement significativement réduit, et par conséquent une endurance améliorée. On entend par compositions internes les compositions destinées à la fabrication des nappes d'armature de sommet, des nappes d'armature de carcasse, des bourrelets, des protecteurs, des sous-couches, des blocs de caoutchouc et autres gommes internes, notamment les gommes de découplage, destinés à assurer la liaison ou l'interface entre les zones précitées des pneumatiques.

Les pneumatiques conformes à l'invention sont notamment destinés à des véhicules tourisme, à des véhicules industriels choisis parmi les camionnettes, "Poids- lourd" - i.e., métro, bus, engins de transport routier (camions, tracteurs, remorques), véhicules hors-la-route, engins agricoles ou de génie civil, avions, autres véhicules de transport ou de manutention.

Les caractéristiques précitées de la présente invention, ainsi que d'autres, seront mieux comprises à la lecture de la description suivante de plusieurs exemples de réalisation de l'invention, donnés à titre illustratif et non limitatif.

### I. MESURES ET TESTS UTILISES

Les compositions de caoutchouc sont caractérisées avant et après cuisson, comme indiqué ci-après:
a) la viscosité Mooney ML (1+4) à 100° C: mesurée selon la norme ASTM: D-1646, intitulée "Mooney" dans les tableaux,
b) la dureté SHORE A: mesures effectuées selon la norme DIN 53505
c) l'indice de cassage Scott à 23°C: on détermine la contrainte à la rupture (FR) en MPa et l'allongement à la rupture (AR) en %. Toutes ces mesures de traction sont effectuées dans les conditions normales de température et d'hygrométrie selon la norme ISO 37.
d) La propriété dynamique tan(δ)max est mesurée sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le facteur de perte tan δ. Pour le cycle retour, on indique la valeur maximale de tan δ observée (tan(δ)max)

### II. PREPARATION DES MASTERBATCHES

Plusieurs molécules de poly-amine ont été utilisées comme additif du caoutchouc naturel pour fabriquer un masterbatch conformément à une variante du procédé de l'invention :
- le 1,6-hexaméthylène diamine (HMDA),
- le 1,8-octamethylenediamine (DAO),
- lel ,4-diaminocyclohexane (1,4DACH),
- le N,N-bis(2-aminoethyl)ethane-1,2-diamine (TAEA).

Le caoutchouc naturel utilisé pour constituer les masterbatches (M.. par exemple, MC, MD ou ME) est un NR référencé TSR20.

Le mode d'incorporation de la molécule est le suivant :
Sur un outil à cylindres dont les rouleaux ont un diamètre égal à 150 mm, un entre-fer égal à 2 mm et une vitesse de rotation des rouleaux de 20 tour.min-1, le caoutchouc naturel subit les étapes suivantes :
   1) 3 passes du caoutchouc naturel initialement à température ambiante ;
   2) ajout d'une quantité donnée de composé poly-amine sous forme de poudre ;
   3) réalisation de 12 passes de manière à disperser la poudre et à homogénéiser l'échantillon.

Le détail est présenté dans le tableau 1 ci-dessous :
Les étapes subies par le caoutchouc naturel sont signalées d'une croix dans le tableau:

**Tableau 1**

| Elastomère ou masterbatch | Type | Polyamine | Quantité en pce | Quantité en mmol pour 100g d'élastomère | Etape 1 | Etape 2 | Etape 3 |
|---|---|---|---|---|---|---|---|
| B | TSR20 | | | | X | | X |
| MC | TSR20 | HMDA | 0,30 | 2,6 | X | X | X |
| MD | TSR20 | TAEA | 0,25 | 1,7 | X | X | X |
| ME | TSR20 | 1.4DACH | 0,29 | 2,6 | X | X | X |

Les quantités ajoutées des différentes poly-amines sont identiques en terme de nombre de moles de fonctions amines primaires.

### III. EXEMPLES DE REALISATION DE L'INVENTION

Les exemples de réalisation ont pour but de comparer les propriétés d'une composition conforme à l'invention comportant un composé poly-amine à faible taux et préparée selon le procédé conforme à l'invention à une autre composition identique mais ne comportant pas de composé poly-amine. Le mode opératoire de réalisation des compositions est le même pour toutes les compositions testées.

Les exemples montrent les propriétés améliorées, notamment l'hystérèse d'une composition conforme à l'invention lorsque la charge renforçante est à 100% une charge organique comme le noir de carbone.

### Exemple 1

Les compositions testées présentent la formulation suivante (exprimée en pce : parties pour cent parties d'élastomère) :

| | |
|---|---|
| Elastomère diénique (1) | 100 |
| Charge (2) | 54 |
| Anti oxydant (3) | 4 |
| Paraffine | 1 |
| Acide stéarique (4) | 1,5 |
| ZnO (5) | 3 |
| Accélérateur (6) | 1,1 |
| Soufre | 1,1 |

| | |
|---|---|
| *(1) = Caoutchouc naturel* *(2) = noir de carbone N234* *(3) = N-(1,3-diméthylbutyl)-N'-phényl-p-phénylènediamine ("Santoflex 6-PPD» de la société Flexsys)* *(4) = "Pristerene 4931» de la société Uniguema* *(5) = grade industriel de la société Umicore* (6) *= CBS de la société Flexsys* | |

Chacune des compositions est réalisée, dans un premier temps, par un travail thermomécanique, puis, dans un second temps de finition, par un travail mécanique.

On introduit successivement, dans un mélangeur interne de laboratoire de type 'Banbury', dont la capacité est de 85 cm3, qui est rempli à 70% et dont la température initiale est d'environ 80°C, l'élastomère et 30 secondes après, le noir de carbone, l'acide stéarique, l'oxyde de zinc, l'antioxydant et la paraffine.

On conduit l'étape de travail thermomécanique pendant 3 à 6 minutes, jusqu'à une température maximale de tombée de 165°C environ.

Le premier temps précité de travail thermomécanique est ainsi réalisé, étant précisé que la vitesse moyenne des palettes lors de ce premier temps est de 70 tr/min.

On récupère le mélange ainsi obtenu, on le refroidit puis, dans un mélangeur externe (homo-finisseur), on ajoute, le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés avant et après réticulation.

Les compositions ainsi obtenues peuvent également être extrudées sous la forme de profilés directement utilisables, après découpage et/ou assemblage aux dimensions souhaitées, par exemple comme produits semi-finis pour pneumatiques.

Résultats obtenus :

**Tableau 2**

| Composition | B | C | D | E |
|---|---|---|---|---|
| Elastomère ou Masterbatch | B | MC | MD | ME |

| **Propriétés à l'état non réticulé** | | | | |
|---|---|---|---|---|
| ML 1+4 à 100°C ("Mooney mélange") | 100 | 121 | 108 | 113 |

| **Propriétés dynamiques en fonction de la déformation** | | | | |
|---|---|---|---|---|
| tan (δ) max à 23°C | 100 | 91 | 94 | 94 |

On notera que les compositions C, D et E selon l'invention présentent une valeur de Mooney « mélange » supérieure à celle de la composition B à base d'un NR uniquement travaillé sur outil.

Concernant les propriétés dynamiques, on notera que les valeurs de tan (δ) max à 23°C des compositions C, D et E sont inférieures à celles de la composition B à base d'un NR uniquement passé sur outil.

Les masterbatches MC, MD ou ME comprenant une poly-amine selon l'invention permettent d'améliorer les propriétés hystérétiques par rapport au caoutchouc naturel B passé sur outil sans introduction de molécule.

En d'autres termes, les compositions C, D et E selon l'invention à base de NR comprenant une poly-amine présentent des propriétés de caoutchouterie à l'état réticulé qui sont améliorées par rapport à celles de la composition B à base de NR non modifié du fait d'une hystérèse réduite.

### Exemple 2

Les compositions testées sont préparées sans réalisation préalable et avec réalisation préalable d'un masterbatch comme décrit ci-dessus.

### Voie masterbatch :

Le détail est présenté dans le tableau 3 ci-dessous.

Les étapes subies par le caoutchouc naturel sont signalées d'une croix dans le tableau.

**Tableau 3**

| Elastomère ou masterbatch | Type | Polyamine | Quantité en pce | Quantité en mmol pour 100g d'élastomère | Etape 1 | Etape 2 | Etape 3 |
|---|---|---|---|---|---|---|---|
| A | TSR20 | | | | | | |
| B | TSR20 | | | | X | | X |
| MF | TSR20 | HMDA | 0,3 | 2,6 | X | X | X |
| MH | TSR20 | HMDA | 0,7 | 6,0 | X | X | X |
| MI | TSR20 | DAO | 0,37 | 2,6 | X | X | X |
| MJ | TSR20 | DAO | 0,62 | 4,3 | X | X | X |
| MK | TSR20 | DAO | 0,87 | 6,0 | X | X | X |

### Introduction directe au mélangeur interne

Le détail est présenté dans le tableau 4 ci-dessous.

**Tableau 4**

| Référence mélange | Type | Polyamine | Quantité en pce | Quantité en mmol pour 100g d'élastomère | Introduction |
|---|---|---|---|---|---|
| MI L | TSR20 | DAO | 0,62 | 4,3 | au mélangeur interne en même temps que l'élastomère |

Les compositions testées présentent la même formulation que celle décrite à l'exemple 1.

Chacune des compositions suivantes est réalisée, dans un premier temps, par un travail thermomécanique, puis, dans un second temps de finition, par un travail mécanique.

On introduit, dans un mélangeur interne de laboratoire de type 'Banbury', dont la capacité est de 400 cm3, qui est rempli à 75% et dont la température initiale est d'environ 70°C, l'élastomère ou le masterbatch. A 100°C, sont introduits le noir de carbone, l'acide stéarique, l'oxyde de zinc, l'antioxydant, la paraffine et dans le cas du mélange MI L, la poly-amine.

On conduit l'étape de travail thermomécanique pendant 3 à 5 minutes.

Le premier temps précité de travail thermomécanique est ainsi réalisé, étant précisé que la vitesse moyenne des palettes lors de ce premier temps est de 65-70 tr/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Compositions A, B, F, H, I, J et K, le détail est présenté dans le tableau 5 ci-dessous.

**Tableau 5**

| Composition | A | B | F | H | I | J | K |
|---|---|---|---|---|---|---|---|
| Elastomère ou Masterbatch | A | B | MF | MH | MI | MJ | MK |

| **Propriétés à l'état non réticulé** | | | | | | | |
|---|---|---|---|---|---|---|---|
| ML 1+4 à 100°C ("Mooney mélange") | 100 | 92 | 117 | 120 | 120 | 124 | 129 |

| **Propriétés à l'état réticulé** | | | | | | | |
|---|---|---|---|---|---|---|---|
| Shore A à 23°C | 100 | 101 | 103 | 103 | 102 | 105 | 103 |

| Indice de cassage Scott à 23°C | | | | | | | |
|---|---|---|---|---|---|---|---|
| Fr | 100 | 99 | 104 | 105 | 104 | 106 | 107 |
| Ar (%) | 555 | 538 | 541 | 541 | 524 | 542 | 536 |

| **Propriétés dynamiques en fonction de la déformation** | | | | | | | |
|---|---|---|---|---|---|---|---|
| tan (δ) max à 23°C | 100 | 106 | 96 | 95 | 93 | 93 | 91 |

On notera que les compositions F, H, I, J et K selon l'invention présentent une valeur de Mooney « mélange » supérieure à celle de la composition A à base d'un NR non modifié et à celle de la composition B à base d'un NR passé sur outil sans introduction de molécule poly-amine.

Concernant les propriétés dynamiques, on notera que les valeurs de tan (δ) max des compositions F, H, I, J et K sont inférieures à celles de la composition A à base d'un NR non modifié et à celle de la composition B à base d'un NR passé sur outil sans introduction de molécule.

En d'autres termes, les compositions F, H, I, J et K selon l'invention à base de NR comprenant une diamine présentent des propriétés de caoutchouterie à l'état réticulé qui sont améliorées par rapport à celles de la composition A à base de NR non modifié, à celles de la composition B à base d'un NR passé sur outil sans introduction de composé polyamine du fait d'une hystérèse tan (δ) nettement réduite.

Compositions J et L : effet introduction, le détail est présenté dans le tableau 6 ci-dessous.

**Tableau 6**

| Composition | A | J | L |
|---|---|---|---|
| Elastomère ou Masterbatch | A | MJ | MI L |

| **Propriétés à l'état non réticulé** | | | |
|---|---|---|---|
| ML 1+4 à 100°C ("Mooney mélange") | 100 | 124 | 128 |

| **Propriétés à l'état réticulé** | | | |
|---|---|---|---|
| Shore A à 23°C | 100 | 105 | 105 |

| Indice de cassage Scott à 23°C | | | |
|---|---|---|---|
| FR | 100 | 106 | 106 |
| AR (%) | 555 | 542 | 519 |

| **Propriétés dynamiques en fonction de la déformation** | | | |
|---|---|---|---|
| tan (δ) max à 23°C | 100 | 93 | 95 |

On notera que les compositions J et L selon l'invention présentent une valeur de Mooney « mélange » supérieure à celle de la composition A à base d'un NR non modifié.

Concernant les propriétés dynamiques, on notera que les valeurs de tan (δ) max des compositions J et L sont inférieures à celles de la composition A à base d'un NR non modifié.

La voie masterbatch MJ ou l'introduction directe MI L comprenant la même diamine selon l'invention permet d'améliorer les propriétés hystérétiques des compositions à base de NR par rapport à celles de la composition A non modifiée par l'ajout d'une poly-amine.

En d'autres termes, les compositions J et L selon l'invention à base de NR comprenant une diamine introduite dans le caoutchouc naturel, soit avant la réalisation du mélange au mélangeur (voie masterbatch), soit introduite directement lors de la réalisation du mélange, présentent des propriétés de caoutchouterie à l'état réticulé qui sont améliorées par rapport à celles de la composition A à base de NR non modifié du fait d'une hystérèse tan (δ) réduite.

### Exemple 3

Les compositions testées sont préparées sans réalisation préalable d'un masterbatch ou avec réalisation préalable d'un masterbatch ou avec réalisation d'un masterbatch au mélangeur interne.

### Voie masterbatch:

Le détail est présenté dans le tableau 7 ci-dessous.

Les étapes subies par le caoutchouc naturel sont signalées d'une croix dans le tableau.

**Tableau 7**

| Elastomère ou masterbatch | Type | Polyamine | Quantité en pce | Quantité en mmol pour 100g d'élastomère | Etape 1 | Etape 2 | Etape 3 |
|---|---|---|---|---|---|---|---|
| A | TSR20 | | | | | | |
| B | TSR20 | | | | X | | X |
| MM | TSR20 | DAO | 0,2 | 1,4 | X | X | X |
| MN | TSR20 | DAO | 0,37 | 2,6 | X | X | X |
| MO | TSR20 | DAO | 0,62 | 4,3 | X | X | X |
| MP | TSR20 | DAO | 0.87 | 6,0 | X | X | X |

### Introduction directe au mélangeur interne

Le détail est présenté dans le tableau 8 ci-dessous.

**Tableau 8**

| Référence mélange | Type | Polyamine | Quantité en pce | Quantité en mmol pour 100g d'élastomère | Introduction |
|---|---|---|---|---|---|
| M1 Q | TSR20 | DAO | 0,2 | 1,4 | En même temps que l'élastomère au mélangeur interne |
| MI R | TSR20 | DAO | 0,37 | 2,6 | En même temps que l'élastomère au mélangeur interne |
| MI S | TSR20 | DAO | 0,62 | 4,3 | En même temps que l'élastomère au mélangeur interne |
| MI T | TSR20 | DAO | 0.87 | 6,0 | En même temps que l'élastomère au mélangeur interne |

### Réalisation du masterbatch au mélangeur interne :

Le détail est présenté dans le tableau 9 ci-dessous.

**Tableau 9**

| Référence mélange | Type | Poly-amine | Quantité en pce | Quantité en mmol pour 100g d'élastomère |
|---|---|---|---|---|
| MU | TSR20 | DAO | 0,37 | 2,6 |

Le masterbatch MU a été réalisé avec un NR TSR20 modifié préalablement au mélangeur interne dans les conditions suivantes:

On introduit, dans un mélangeur interne de laboratoire de type 'Banbury', dont la capacité est de 400 cm3, qui est rempli à 85% et dont la température initiale est d'environ 70°C, l'élastomère. A 100°C, la DAO est introduite.

On conduit l'étape de travail thermomécanique pendant 3 à 5 minutes jusqu'à une température maximale de tombée de 180°C environ.

Le premier temps précité de travail thermomécanique est ainsi réalisé, étant précisé que la vitesse moyenne des palettes lors de ce premier temps est de 80 tr/min.

Chacune des compositions testées présente la formulation suivante (exprimée en pce : parties pour cent parties d'élastomère) :

| | |
|---|---|
| Elastomère diénique (1) | 100 |
| Charge (2) | 54 |
| Anti oxydant (3) | 4 |
| Paraffine | 1 |
| Acide stéarique (4) | 1,5 |
| ZnO (5) | 3 |
| Accélérateur (6) | 1,1 |
| Soufre | 1,1 |
| CTP (7) | 0,3 |

| | |
|---|---|
| *(1) = Caoutchouc naturel* (2) *= noir de carbone N234* *(3) = N-(1,3-dimélhylbutyl)-N'-phényl-p-phénylènediamine ("Santoflex 6-PPD» de la société Flexsys)* *(4) = "Pristerene 4931 » de la société Uniquema* *(5) = grade industriel de la société Umicore* *(6) = CBS de la société Flersys* *(7) = cycloheylthiophtalimide* | |

Chacune des compositions suivantes est réalisée, dans un premier temps, par un travail thermomécanique, puis, dans un second temps de finition, par un travail mécanique.

On introduit, dans un mélangeur interne de laboratoire de type 'Banbury', dont la capacité est de 400 cm3, qui est rempli à 75% et dont la température initiale est d'environ 70°C, l'élastomère ou le masterbatch. A 100°C, sont introduits le noir de carbone, l'acide stéarique, l'oxyde de zinc, l'antioxydant, la paraffine et dans le cas des mélanges MI Q, MI R, MI S et MI T , la poly-amine.

On conduit l'étape de travail thermomécanique pendant 3 à 5 minutes.

Le premier temps précité de travail thermomécanique est ainsi réalisé, étant précisé que la vitesse moyenne des palettes lors de ce premier temps est de 65-70 tr/min.

On récupère le mélange ainsi obtenu, on le refroidit puis, dans un mélangeur externe (homo-finisseur), on ajoute le soufre, la sulfénamide et le CTP à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

### Résultats obtenus :

Compositions A, B, M, N, O, P, Q, R, S, T et U, le détail est présenté dans le tableau 10 ci-dessous:

**Tableau 10**

| Compositions | A | B | M | N | O | P | Q | R | S | T | U |
|---|---|---|---|---|---|---|---|---|---|---|---|
| Elastomère ou Masterbatch | A | B | MM | MN | MO | MP | MI Q | MI R | MI S | MI T | MU |

| **Propriétés à l'état non réticulé** | | | | | | | | | | | |
|---|---|---|---|---|---|---|---|---|---|---|---|
| ML 1+4 à 100°C ("Mooney mélange") | 100 | 106 | 107 | 118 | 127 | 121 | 121 | 129 | 131 | 131 | 122 |

| **Propriétés à l'état réticulé** | | | | | | | | | | | |
|---|---|---|---|---|---|---|---|---|---|---|---|
| Shore A à 23°C | 100 | 101 | 102 | 101 | 102 | 103 | 101 | 101 | 101 | 103 | 103 |

| Indice de cassage Scott à 23°C | | | | | | | | | | | |
|---|---|---|---|---|---|---|---|---|---|---|---|
| FR | 100 | 101 | 99 | 99 | 96 | 96 | 104 | 104 | 101 | 99 | 102 |
| AR (%) | 549 | 535 | 517 | 521 | 488 | 488 | 539 | 542 | 512 | 515 | 535 |

| **Propriétés dynamiques en fonction de la déformation** | | | | | | | | | | | |
|---|---|---|---|---|---|---|---|---|---|---|---|
| tan (δ) max à 23°C | 100 | 99 | 95 | 91 | 90 | 89 | 90 | 93 | 84 | 89 | 93 |

On notera que d'une part les compositions M, N, O et P selon l'invention présentent une valeur de Mooney « mélange » supérieure à celle de la composition A à base d'un NR non modifié par l'ajout d'un composé poly-amine et à celle de la composition B à base d'un NR passé sur outil sans introduction de composé poly-amine.

Concernant les propriétés dynamiques, on notera que les valeurs de tan(δ) max des compositions M, N, O et P sont inférieures à celles de la composition A à base d'un NR non modifié et à celle de la composition B à base d'un NR passé sur outil sans introduction de molécule.

En d'autres termes, les compositions M, N, O et P selon l'invention à base de NR comprenant une diamine introduite dans le caoutchouc naturel avant la réalisation du mélange au mélangeur (voie masterbatch) présentent des propriétés de caoutchouterie à l'état réticulé qui sont améliorées par rapport à celles de la composition A à base de NR non modifié du fait d'une hystérèse tan (δ) max réduite.

On notera que d'autre part les compositions Q, R, S et T selon l'invention présentent une valeur de Mooney « mélange » supérieure à celle de la composition A à base d'un NR non modifié par l'ajout d'un composé poly-amine et à celle de la composition B à base d'un NR passé sur outil sans introduction de molécule.

Concernant les propriétés dynamiques, on notera que les valeurs de tan(δ) max des compositions Q, R, S et T sont inférieures à celles de la composition A à base d'un NR non modifié et à celle de la composition B à base d'un NR passé sur outil sans introduction de molécule.

En d'autres termes, les compositions Q, R, S et T selon l'invention à base de NR comprenant une diamine introduite au mélangeur lors de la réalisation du mélange présentent des propriétés de caoutchouterie à l'état réticulé qui sont améliorées par rapport à celles de la composition A à base de NR non modifié du fait d'une hystérèse tan(δ) réduite.

Enfin, quel que soit le mode d'introduction du composé poly-amine dans le caoutchouc naturel, soit par la voie masterbatch (réalisé sur outil ou au mélangeur) d'une part, soit par l'introduction du composé poly-amine au mélangeur d'autre part, les compositions N, R et U selon l'invention présentent une valeur de Mooney « mélange » supérieure à celle de la composition A à base d'un NR non modifié et à celle de la composition B à base d'un NR passé sur outil sans introduction de composé poly-amine.

Concernant les propriétés dynamiques on notera que les valeurs de tan(δ) max des compositions N, R et U sont inférieures à celles de la composition A à base d'un NR non modifié et à celle de la composition B à base d'un NR passé sur outil sans introduction de composé poly-amine.

En d'autres termes, les compositions N, R et U à base de NR comprenant une diamine introduite dans le caoutchouc naturel selon les modes d'introduction selon l'invention présentent des propriétés de caoutchouterie à l'état réticulé qui sont améliorées par rapport à celles de la composition A à base de NR non modifié du fait d'une hystérèse tan(δ) max réduite.

## Revendications

1. Composition de caoutchouc renforcée à base au moins (a) d'une matrice élastomérique comprenant du caoutchouc naturel non halogéné, (b) d'une charge renforçante, (c) d'un composé poly-amine primaire répondant aux formules 1 ou 2 suivantes: 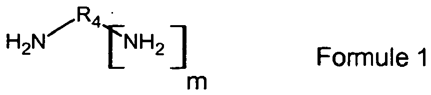 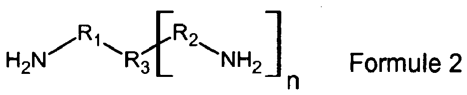 dans lesquelles :
- R₁, R₂, identiques ou différents, sont choisis dans le groupe constitué par les alkylidènes ayant de 1 à 20 atomes de carbone, les cycloalkylidènes ayant de 5 à 24 atomes de carbone, les arylidènes ayant de 6 à 18 atomes de carbone, les aralkylidènes ayant de 7 à 25 atomes de carbone et les hétérocycles, identiques ou différents, ayant de 4 à 25 atomes de carbone;
- R₃, R₄, identiques ou différents, sont choisis dans le groupe constitué par les alkylidènes ayant de 1 à 20 atomes de carbone, les alkylidynes ayant de 1 à 20 atomes de carbone, les alkylylidynes ayant de 1 à 20 atomes de carbone, les cycloalkylidènes ayant de 5 à 24 atomes de carbone, les cycloalkylidynes ayant de 5 à 24 atomes de carbone, les cycloalkylylidynes ayant de 5 à 24 atomes de carbone, les arylidènes ayant de 6 à 18 atomes de carbone, les arylidynes ayant de 6 à 18 atomes de carbone, les arylylidynes ayant de 6 à 18 atomes de carbone, les aralkylidènes ayant de 7 à 25 atomes de carbone, les aralkylidynes ayant de 6 à 18 atomes de carbone, les aralkylylidynes ayant de 6 à 18 atomes de carbone, et les hétérocycles, identiques ou différents, ayant de 4 à 25 atomes de carbone;
- R₃ comporte éventuellement un ou plusieurs hétéroatome(s), identiques ou différents, choisi(s) parmi O, N, S et Si.
- m est égal à 1, 2 ou 3.
- n est égal à 1, 2 ou 3.
dans une quantité comprise entre 0 et 7 mmol pour 100g d'élastomère.

2. Composition de caoutchouc selon la revendication 1, **caractérisée en ce que** le composé poly-amine est présent dans une quantité allant préférentiellement de 1 à 6 mmol..

3. Composition de caoutchouc selon la revendication 1 ou 2, **caractérisée en ce que** la fraction pondérale du caoutchouc naturel dans la matrice élastomérique est supérieure ou égale à 50% en poids du poids total de la matrice.

4. Composition de caoutchouc selon la revendication 3, **caractérisée en ce que** la matrice élastomérique est constituée à 100% de caoutchouc naturel.

5. Composition de caoutchouc selon l'une quelconque des revendications 1 à 4, **caractérisée en ce que** la charge renforçante comprend une charge organique, par exemple du noir de carbone, dans une proportion de 100% en poids du poids total de la composition.

6. Composition de caoutchouc selon l'une quelconque des revendications 1 à 4, **caractérisée en ce que** la charge renforçante comprend une charge inorganique, par exemple une silice renforçante, et **en ce qu'**elle comporte en outre un agent de couplage.

7. Composition de caoutchouc selon l'une quelconque des revendications 1 à 4 et 6, **caractérisée en ce que** la charge renforçante comprend une charge inorganique renforçante dans des proportions allant de 55% à 100% en poids du poids total de la composition.

8. Composition de caoutchouc selon l'une quelconque des revendications 1 à 7, **caractérisée en ce que** le composé poly-amine ayant au moins deux fonctions amines primaires est choisi parmi les di-amines, tri-amines et tétra-amines.

9. Composition de caoutchouc selon la revendication 8, **caractérisée en ce que** le composé poly-amine est choisi parmi les 1,6-hexaméthylènediamine, 1,8-octamethylenediamine, 1,4-diaminocyclohexane, 1,2-diaminocyclohexane, N,N-bis(2-aminoethyl)ethane-1,2-diamine.

10. Procédé de préparation d'une composition de caoutchouc renforcée telle que décrite dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 110 °C, d'un second temps de travail mécanique au cours duquel est incorporé ledit système de réticulation
**caractérisé en ce que**, préalablement à la réalisation de l'étape (i) précitée, le procédé comprend les étapes de fabrication du caoutchouc naturel comprenant une étape d'adjonction du composé poly-amine primaire répondant aux formules 1 ou 2.

11. Procédé de préparation d'une composition de caoutchouc renforcée telle que décrite dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation, par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 110 °C, d'un second temps de travail mécanique au cours duquel est incorporé ledit système de réticulation,
**caractérisé en ce que**, préalablement à la réalisation de l'étape (i) précitée, le procédé comprend une étape de préparation d'un masterbatch à base de caoutchouc naturel non halogéné et du composé poly-amine primaire.

12. Procédé de préparation d'une composition de caoutchouc renforcée telle que décrite dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation, par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 110 °C, d'un second temps de travail mécanique au cours duquel est incorporé ledit système de réticulation
**caractérisé en ce que** l'ajout du composé poly-amine primaire est réalisé directement lors de la phase (i) avec les autres composés de la composition.

13. Procédé de préparation d'un composant du pneumatique selon l'une des revendications 10 à 12, **caractérisé en ce que** le composé poly-amine primaire est ajouté à un faible taux compris entre 0 et 7 mmol pour 100g d'élastomère.

14. Produit semi-fini en caoutchouc pour pneumatique, **caractérisé en ce qu'**il comprend une composition de caoutchouc réticulable ou réticulée selon l'une quelconque des revendications 1 à 9.

15. Pneumatique, **caractérisé en ce qu'**il comporte un produit semi-fini selon la revendication 14.

## Patentansprüche

1. Verstärkte Kautschukzusammensetzung auf Basis von mindestens (a) einer elastomeren Matrix, die nicht halogenierten Naturkautschuk umfasst, (b) einem verstärkenden Füllstoff, (c) einer primären Polyaminverbindung, die den folgenden Formeln 1 oder 2 entspricht: 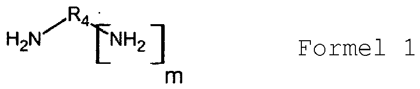 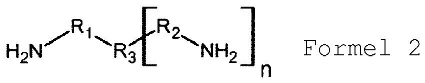 worin:
- R₁ und R₂ gleich oder verschieden sind und aus der Gruppe bestehend aus Alkylidenen mit 1 bis 20 Kohlenstoffatomen, Cycloalkylidenen mit 5 bis 24 Kohlenstoffatomen, Arylidenen mit 6 bis 18 Kohlenstoffatomen, Aralkylidenen mit 7 bis 25 Kohlenstoffatomen und gleichen oder verschiedenen Heterocyclen mit 4 bis 25 Kohlenstoffatomen ausgewählt sind;
- R₃ und R₄ gleich oder verschieden sind und aus der Gruppe bestehend aus Alkylidenen mit 1 bis 20 Kohlenstoffatomen, Alkylidinen mit 1 bis 20 Kohlenstoffatomen, Alkylylidinen mit 1 bis 20 Kohlenstoffatomen, Cycloalkylidenen mit 5 bis 24 Kohlenstoffatomen, Cycloalkylidinen mit 5 bis 24 Kohlenstoffatomen, Cycloalkylylidinen mit 5 bis 24 Kohlenstoffatomen, Arylidenen mit 6 bis 18 Kohlenstoffatomen, Arylidinen mit 6 bis 18 Kohlenstoffatomen, Arylylidinen mit 6 bis 18 Kohlenstoffatomen, Aralkylidenen mit 7 bis 25 Kohlenstoffatomen, Aralkylidinen mit 6 bis 18 Kohlenstoffatomen, Aralkylylidinen mit 6 bis 18 Kohlenstoffatomen und gleichen oder verschiedenen Heterocyclen mit 4 bis 25 Kohlenstoffatomen ausgewählt sind;
- R₃ gegebenenfalls ein oder mehrere gleiche oder verschiedene Heteroatome, die aus 0, N, S und Si ausgewählt sind, enthält,
- m für 1, 2 oder 3 steht,
- n für 1, 2 oder 3 steht,
in einer Menge zwischen 0 und 7 mmol pro 100 g Elastomer.

2. Kautschukzusammensetzung nach Anspruch 1, **dadurch gekennzeichnet, dass** die Polyaminverbindung in einer Menge, die vorzugsweise im Bereich von 1 bis 6 mmol liegt, vorliegt.

3. Kautschukzusammensetzung nach Anspruch 1 oder 2, **dadurch gekennzeichnet, dass** der Gewichtsanteil von Naturkautschuk in der elastomeren Matrix größer gleich 50 Gew.-%, bezogen auf das Gesamtgewicht der Matrix, ist.

4. Kautschukzusammensetzung nach Anspruch 3, **dadurch gekennzeichnet, dass** die elastomere Matrix aus 100% Naturkautschuk besteht.

5. Kautschukzusammensetzung nach einem der Ansprüche 1 bis 4, **dadurch gekennzeichnet, dass** der verstärkende Füllstoff einen organischen Füllstoff, beispielsweise Ruß, in einem Anteil von 100 Gew.-%, bezogen auf das Gesamtgewicht der Zusammensetzung, umfasst.

6. Kautschukzusammensetzung nach einem der Ansprüche 1 bis 4, **dadurch gekennzeichnet, dass** der verstärkende Füllstoff einen anorganischen Füllstoff, beispielsweise eine verstärkende Kieselsäure, und außerdem ein Kupplungsmittel umfasst.

7. Kautschukzusammensetzung nach einem der Ansprüche 1 bis 4 und 6, **dadurch gekennzeichnet, dass** der verstärkende Füllstoff einen verstärkenden anorganischen Füllstoff in Anteilen im Bereich von 55 bis 100 Gew.-%, bezogen auf das Gesamtgewicht der Zusammensetzung, umfasst.

8. Kautschukzusammensetzung nach einem der Ansprüche 1 bis 7, **dadurch gekennzeichnet, dass** die Polyaminzusammensetzung mit mindestens zwei primären Aminfunktionen aus Diaminen, Triaminen und Tetraaminen ausgewählt ist.

9. Kautschukzusammensetzung nach Anspruch 8, **dadurch gekennzeichnet, dass** die Polyaminverbindung aus 1,6-Hexamethylendiamin, 1,8-Octamethylendiamin, 1,4-Diaminocyclohexan, 1,2-Diaminocyclohexan und N,N-Bis(2-aminoethyl)ethan-1,2-diamin ausgewählt ist.

10. Verfahren zur Herstellung einer verstärkten Kautschukzusammensetzung gemäß einem der Ansprüche 1 bis 9, das die folgenden Stufen umfasst:
(i) Durchführung eines ersten Schritts der thermomechanischen Bearbeitung der notwendigen Grundbestandteile der Kautschukzusammensetzung mit Ausnahme des Vernetzungssystems durch inniges Einarbeiten von Bestandteilen der Zusammensetzung in die elastomere Matrix auf Basis von Naturkautschuk durch Kneten bei einer Maximaltemperatur zwischen 130°C und 200°C, dann
(ii) Durchführung eines zweiten Schritts der thermomechanischen Bearbeitung bei einer Temperatur, die unter der Maximaltemperatur des ersten Schritts, vorzugsweise unter 110°C, liegt, in deren Verlauf das Vernetzungssystem eingearbeitet wird,
**dadurch gekennzeichnet, dass** das Verfahren vor der Durchführung der obigen Stufe (i) die Stufen der Herstellung des Naturkautschuks mit einem Schritt des Hinzufügens der primären Polyaminverbindung der Formeln 1 oder 2 umfasst.

11. Verfahren zur Herstellung einer verstärkten Kautschukzusammensetzung gemäß einem der Ansprüche 1 bis 9, das die folgenden Stufen umfasst:
(i) Durchführung eines ersten Schritts der thermomechanischen Bearbeitung der notwendigen Grundbestandteile der Kautschukzusammensetzung mit Ausnahme des Vernetzungssystems durch inniges Einarbeiten von Bestandteilen der Zusammensetzung in die elastomere Matrix auf Basis von Naturkautschuk durch Kneten bei einer Maximaltemperatur zwischen 130°C und 200°C, dann
(ii) Durchführung eines zweiten Schritts der thermomechanischen Bearbeitung bei einer Temperatur, die unter der Maximaltemperatur des ersten Schritts, vorzugsweise unter 110°C, liegt, in deren Verlauf das Vernetzungssystem eingearbeitet wird,
**dadurch gekennzeichnet, dass** das Verfahren vor der Durchführung der obigen Stufe (i) eine Stufe der Herstellung eines Masterbatch auf Basis von nicht halogeniertem Naturkautschuk und der primären Polyaminverbindung umfasst.

12. Verfahren zur Herstellung einer verstärkten Kautschukzusammensetzung gemäß einem der Ansprüche 1 bis 9, das die folgenden Stufen umfasst:
(i) Durchführen eines ersten Schritts der thermomechanischen Bearbeitung der notwendigen Grundbestandteile der Kautschukzusammensetzung mit Ausnahme des Vernetzungssystems durch inniges Einarbeiten von Bestandteilen der Zusammensetzung in die elastomere Matrix auf Basis von Naturkautschuk durch Kneten bei einer Maximaltemperatur zwischen 130°C und 200°C, dann
(ii) Durchführen eines zweiten Schritts der thermomechanischen Bearbeitung bei einer Temperatur, die unter der Maximaltemperatur des ersten Schritts, vorzugsweise unter 110°C, liegt, in deren Verlauf das Vernetzungssystem eingearbeitet wird,
**dadurch gekennzeichnet, dass** die Zugabe der primären Polyaminverbindung direkt während der Phase (i) mit den anderen Verbindungen der Zusammensetzung erfolgt.

13. Verfahren zur Herstellung einer Luftreifenkomponente nach einem der Ansprüche 10 bis 12, **dadurch gekennzeichnet, dass** die primäre Polyaminverbindung in einer kleinen Menge zwischen 0 und 7 mmol pro 100 g Elastomer zugegeben wird.

14. Kautschuk-Halbzeug für Luftreifen, **dadurch gekennzeichnet, dass** es eine vernetzbare oder vernetzte Kautschukzusammensetzung nach einem der Ansprüche 1 bis 9 umfasst.

15. Luftreifen, **dadurch gekennzeichnet, dass** er ein Halbzeug nach Anspruch 14 enthält.

## Claims

1. Reinforced rubber composition based at least (a) on an elastomeric matrix comprising non-halogenated natural rubber, (b) on a reinforcing filler, (c) on a primary polyamine compound corresponding to formula 1 or 2 below: 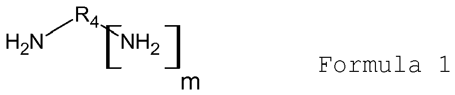 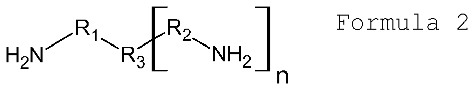 in which:
- R₁ and R₂, which are identical or different, are selected from the group consisting of alkylidenes having from 1 to 20 carbon atoms, cycloalkylidenes having from 5 to 24 carbon atoms, arylidenes having from 6 to 18 carbon atoms, aralkylidenes having from 7 to 25 carbon atoms and heterocycles, which are identical or different, having from 4 to 25 carbon atoms;
- R₃ and R₄, which are identical or different, are selected from the group consisting of alkylidenes having from 1 to 20 carbon atoms, alkylidynes having from 1 to 20 carbon atoms, alkylylidynes having from 1 to 20 carbon atoms, cycloalkylidenes having from 5 to 24 carbon atoms, cycloalkylidynes having from 5 to 24 carbon atoms, cycloalkylylidynes having from 5 to 24 carbon atoms, arylidenes having from 6 to 18 carbon atoms, arylidynes having from 6 to 18 carbon atoms, arylylidynes having from 6 to 18 carbon atoms, aralkylidenes having from 7 to 25 carbon atoms, aralkylidynes having from 6 to 18 carbon atoms, aralkylylidynes having from 6 to 18 carbon atoms, and heterocycles, which are identical or different, having from 4 to 25 carbon atoms;
- R₃ optionally comprises one or more identical or different heteroatom(s), chosen from O, N, S and Si;
- m is equal to 1, 2 or 3;
- n is equal to 1, 2 or 3,
in an amount between 0 and 7 mmol per 100 g of elastomer.

2. Rubber composition according to Claim 1, **characterized in that** the polyamine compound is present in an amount preferably ranging from 1 to 6 mmol.

3. Rubber composition according to Claim 1 or 2, **characterized in that** the weight fraction of natural rubber in the elastomeric matrix is greater than or equal to 50% by weight of the total weight of the matrix.

4. Rubber composition according to Claim 3, **characterized in that** the elastomeric matrix consists of 100% natural rubber.

5. Rubber composition according to any one of Claims 1 to 4, **characterized in that** the reinforcing filler comprises an organic filler, for example carbon black, in a proportion of 100% by weight of the total weight of the composition.

6. Rubber composition according to any one of Claims 1 to 4, **characterized in that** the reinforcing filler comprises an inorganic filler, for example a reinforcing silica, and **in that** it also comprises a coupling agent.

7. Rubber composition according to any one of Claims 1 to 4 and 6, **characterized in that** the reinforcing filler comprises a reinforcing inorganic filler in proportions ranging from 55% to 100% by weight of the total weight of the composition.

8. Rubber composition according to any one of Claims 1 to 7, **characterized in that** the polyamine compound having at least two primary amine functions is chosen from diamines, triamines and tetraamines.

9. Rubber composition according to Claim 8, **characterized in that** the polyamine compound is chosen from 1,6-hexamethylenediamine, 1,8-octamethylenediamine, 1,4-diaminocyclohexane, 1,2-diaminocyclohexane, N,N-bis(2-aminoethyl)ethane-1,2-diamine.

10. Process for the preparation of a reinforced rubber composition as described in any one of Claims 1 to 9, comprising the following stages:
(i) carrying out, at a maximum temperature of between 130°C and 200°C, a first step of thermomechanical working of the necessary base constituents of the rubber composition, with the exception of the crosslinking system, by intimately incorporating, by kneading, ingredients of the composition in the elastomeric matrix based on natural rubber, then
(ii) carrying out, at a temperature lower than said maximum temperature of said first step, preferably of less than 110°C, a second step of mechanical working during which said crosslinking system is incorporated,
**characterized in that**, prior to carrying out the abovementioned stage (i), the process comprises the stages of the manufacture of natural rubber comprising a stage of addition of the primary polyamine compound corresponding to formula 1 or 2.

11. Process for the preparation of a reinforced rubber composition as described in any one of Claims 1 to 9, comprising the following stages:
(i) carrying out, at a maximum temperature of between 130°C and 200°C, a first step of thermomechanical working of the necessary base constituents of the rubber composition, with the exception of the crosslinking system, by intimately incorporating, by kneading, ingredients of the composition in the elastomeric matrix based on natural rubber, then
(ii) carrying out, at a temperature lower than said maximum temperature of said first step, preferably of less than 110°C, a second step of mechanical working during which said crosslinking system is incorporated,
**characterized in that**, prior to carrying out the abovementioned stage (i), the process comprises a stage of preparation of a masterbatch based on non-halogenated natural rubber and on the primary polyamine compound.

12. Process for the preparation of a reinforced rubber composition as described in any one of Claims 1 to 9, comprising the following stages:
(i) carrying out, at a maximum temperature of between 130°C and 200°C, a first step of thermomechanical working of the necessary base constituents of the rubber composition, with the exception of the crosslinking system, by intimately incorporating, by kneading, ingredients of the composition in the elastomeric matrix based on natural rubber, then
(ii) carrying out, at a temperature lower than said maximum temperature of said first step, preferably of less than 110°C, a second step of mechanical working during which said crosslinking system is incorporated,
**characterized in that** the primary polyamine compound is added directly during stage (i) with the other compounds of the composition.

13. Process for the preparation of a tyre component according to one of Claims 10 to 12, **characterized in that** the primary polyamine compound is added in a small proportion of between 0 and 7 mmol per 100 g of elastomer.

14. Tyre semi-finished rubber product, **characterized in that** it comprises a crosslinkable or crosslinked rubber composition according to any one of Claims 1 to 9.

15. Tyre, **characterized in that** it comprises a semi-finished product according to Claim 14.
